**Europäisches Patentamt**

(19) **European Patent Office**

**Office européen des brevets**

(11) Veröffentlichungsnummer: **0 169 303 B1**

(12) # EUROPÄISCHE PATENTSCHRIFT

(45) Veröffentlichungstag der Patentschrift:
14.06.89

(51) Int. Cl.⁴: **B 60 T 15/22**

(21) Anmeldenummer: 85103068.4

(22) Anmeldetag: 16.03.85

(54) Anhänger-Steuerventil.

(30) Priorität: 26.07.84 DE 3427560

(43) Veröffentlichungstag der Anmeldung:
29.01.86 Patentblatt 86/5

(45) Bekanntmachung des Hinweises auf die Patenterteilung:
14.06.89 Patentblatt 89/24

(84) Benannte Vertragsstaaten:
DE FR GB IT

(56) Entgegenhaltungen:
DE-A- 2 520 692
DE-A- 2 549 982
DE-A- 2 615 893
DE-A- 2 735 506

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Schulz, Hans-Joachim, Gilborn 26,
D-3002 Wedemark (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

ACTORUM AG

## Beschreibung

Die Erfindung betrifft ein Anhänger-Steuerventil für eine druckluftbetätigte Zweileitungs-Bremsanlage gemäss dem Oberbegriff des Patentanspruchs 1.

Bei Zweileitungs-Bremsanlagen besteht die Druckluftverbindung zwischen dem Motorfahrzeug und dem Anhänger aus einer Vorratsleitung und einer Bremsleitung. Bei einem Bruch der Anhänger-Bremsleitung wird die Vorratsleitung bei einer Bremsung über die Bruchstelle entlüftet und damit eine Bremsung des Anhängers über die Vorratsleitung ausgelöst. Da jedoch der Luftdruck in den Behältern des Motorfahrzeugs zunächst auf die Sicherheitsdrücke, z.B. bei Zweikreis-Zweileitungs-Bremsanlagen auf die Schliessdrücke des Mehrkreis-Schutzventils und des betreffenden Überströmventils fallen muss, würde es unter Umständen viele Sekunden dauern, bis der Druck in der Vorratsleitung unter einen vorbestimmten Wert, gemäss EG-Richtlinien 1,5 bar, fällt und der Anhänger bremst. Als Folge dieser langen Zeitdauer bestünde die Gefahr, dass bei einer Vollbremsung nur das Motorfahrzeug bremst, während die Bremsanlage des Anhängers nicht bzw. viel zu spät anspricht, was vor allem bei schwer beladenen Anhängerfahrzeugen zur Folge hätte, dass dieses aufschiebt und der Lastzug einknickt.

Eine aus der DE-OS 2 520 692 bekannte Einrichtung löst dieses Problem dadurch, dass an das Anhänger-Steuerventil eine schaltbare Drossel angeflanscht ist, über die die Vorratsleitung geführt ist. Die Drossel weist ein Betätigungsglied auf, welches von einem in das Anhänger-Steuerventil integrierten Steuerkolben betätigbar ist. Der Steuerkolben wird einerseits vom Steuerdruck des Anhänger-Steuerventils und andererseits vom Ausgangsdruck des Anhänger-Steuerventils so beaufschlagt, dass die Vorratsleitung bei einem Bruch der Anhänger-Bremsleitung gedrosselt wird.

Die somit erreichte Drosselung des Druckluftdurchsatzes durch die Vorratsleitung bewirkt nun eine Entlüfung des der Drossel nachgeschalteten Teiles der Vorratsleitung innerhalb von 2 Sekunden unter den erwähnten Wert von 1,5 bar und ermöglicht somit eine schnelle automatische Bremsung des Anhängers beim Bruch der Anhänger-Bremsleitung.

Bei diesem bekannten Anhänger-Steuerventil kann es passieren, dass bei intakter Bremsanlage während der Bremsdruckeinsteuerphase der die Drossel betätigende Steuerkolben in eine Stellung gebracht wird, in welcher er die Drossel im Sinne einer Verringerung des Drosselquerschnittes betätigt. Die Folge ist eine gedrosselte Zufuhr des Vorratsdruckes zur Anhänger-Vorratsleitung und zur Anhänger-Bremsleitung.

Diese möglicherweise auftretende unbeabsichtigte Drosselung des Vorratsdruckes wird dadurch verursacht, dass bei einem Bremsvorgang der Steuerkolben vom Steuerdruck des Anhänger-Steuerventils in Schliessrichtung der veränderbaren Drossel beaufschlagt wird, bevor über das kombinierte Einlass- und Auslassventil Vorratsdruck von der Druckmitteleingangskammer in die Druckmittelausgangskammer gelangt und den Steuerkolben entgegen dem Steuerdruck des Anhänger-Steuerventils in Öffnungsrichtung der veränderbaren Drossel beaufschlagt.

Der Erfindung liegt deshalb die Aufgabe zugrunde, ein Anhänger-Steuerventil der eingangs erwähnten Art zu schaffen, bei welchem eine unbeabsichtigte Drosselung des Vorratsdruckes ausgeschlossen ist.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, dass eine unbeabsichtigte Drosselung des Vorratsdruckes während einer Betriebsbremsung bei intakter Bremsanlage ausgeschlossen ist, da der Vorratsdruck in der Druckmitteleingangskammer ständig den Steuerkolben in Richtung auf die Offenstellung der Drossel zu beaufschlagt und der entgegengerichtet auf den Steuerkolben einwirkende Steuerdruck erst bei Betätigen des Bremsventils des Zugfahrzeugs in die vom Steuerkolben begrenzte Steuerkammer gelangt. Die einander entgegengerichteten Wirkflächen des Steuerkolbens sind so ausgelegt, dass bei intakter Anhänger-Bremsleitung die in Öffnungsrichtung der Drossel auf den Steuerkolben einwirkende Kraft grösser ist als die entgegengerichtete Kraft. Gemäss einer vorteilhaften Weiterbildung des Erfindungsgegenstandes ist die schaltbare Drossel in das Anhänger-Steuerventil integriert, wodurch eine kompakte Bauweise des Anhänger-Steuerventils erzielt wird. Da der die Drossel betätigende Steuerkolben einerseits vom Steuerdruck des Anhänger-Steuerventils und andererseits vom Vorratsdruck aus der Druckmitteleingangskammer des Anhänger-Steuerventils beaufschlagt wird, kann der Schaltpunkt der Drossel genau definiert werden. Gemäss einer vorteilhaften Ausgestaltung des Erfindungsgegenstandes erfolgt die Drosselung des Vorratsdruckes nur im Bereich zwischen dem ersten Vorratsanschluss und der Druckmitteleingangskammer, so dass bei einem Bruch der Anhänger-Bremsleitung der hinter der Drossel liegende Teil der Vorratsleitung über den zweiten Vorratsanschluss, die Druckmitteleingangskammer und die Druckmittelausgangskammer sehr schnell entlüftet wird.

Anhand der Zeichnung werden nachstehend zwei Ausführungsbeispiele der Erfindung näher erläutert. Es zeigen:

Fig. 1 ein Anhänger-Steuerventil für eine Zweikreis-Zweileitungsbremsanlage mit integrierter schaltbarer Drossel, wobei die Drossel von einem zwischen einem Gehäusevorsprung und einem Steuerkolben vorgesehenen Spalt gebildet wird und

Fig. 2 ein Anhänger-Steuerventil für eine Zweikreis-Zweileitungsbremsanlage mit einer an das Anhänger-Steuerventil angeflanschten schaltbaren Drossel, welche nach dem gleichen Prinzip arbeitet wie die Drossel gemäss Fig. 1.

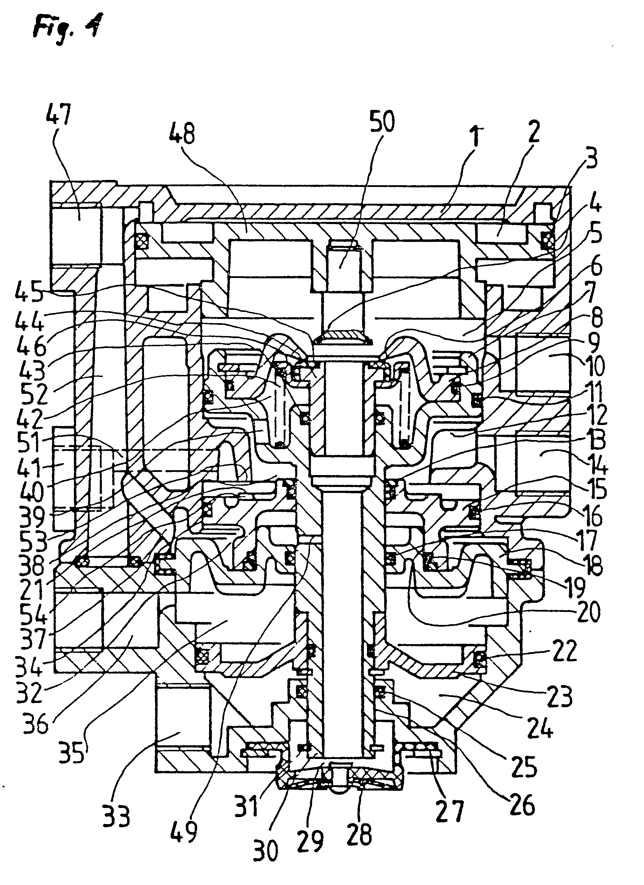

Gemäss Fig. 1 ist in einem Ventilgehäuse 1 ein erster Relaiskolben 48 angeordnet, welcher eine erste Steuerkammer 2 von einer Druckmittelausgangskammer 5 trennt. Die Steuerkammer 2 ist über einen ersten Steueranschluss 47 mit einem ersten Bremskreis des Motorfahrzeugs verbunden. Über einen Druckmittelausgang 10 steht die Druckmittelausgangskammer 5 mit einer zum Anhänger-Bremsventil eines Anhängerfahrzeuges führenden Anhänger-Bremsleitung in Verbindung. Der Relaiskolben 48 weist einen in Umfangsrichtung verlaufenden Dichtring 3 auf, welcher verhindert, dass Druckmittel von der ersten Steuerkammer 2 in die Druckmittelausgangskammer 5 gelangt. Unterhalb des ersten Relaiskolbens 48 ist ein aus einem ersten Relaiskolbenteil 7, 8 und einem zweiten Relaiskolbenteil 23 bestehender zweiter Relaiskolben angeordnet, wobei die beiden Relaiskolbenteile 7, 8 und 23 hintereinander geschaltet und fest miteinander verbunden sind. Ein auf der Umfangsfläche des ersten Relaiskolbenteiles 7, 8 angeordneter Dichtring 11 dichtet die Druckmittelausgangskammer 5 gegen eine gegenüberliegende, auf der anderen Seite des ersten Relaiskolbenteiles 7, 8 angeordnete Druckmitteleingangskammer 38 ab. Im ersten Relaiskolbenteil 7, 8 ist zentrisch eine Ausnehmung angeordnet, die im oberen Kolbenteil 8 des ersten Relaiskolbenteils 7, 8 als Ventilsitz 6 ausgebildet ist. Das untere Kolbenteil 7 des ersten Relaiskolbenteils 7, 8 ist mit einem abgestuften Kolbenrohr 30 verbunden. Das freie Ende des Kolbenrohres 30 wird in einer Ausnehmung des Ventilgehäusebodens mittels eines Dichtringes 25 abgedichtet geführt. Im Kolbenrohr 30 ist ein mit einem Dichtring 43 versehener, als Ventilglied 44 ausgebildeter zylindrischer Hohlkörper befestigt, der auf seiner dem Ventilsitz 6 zugewandten Seite ein Dichtelement 45 trägt. Das mit dem Dichtelement 45 versehene Ventilglied 44 bildet mit dem Ventilsitz 6 ein Einlassventil 44, 45, 6, über welches die Druckmitteleingangskammer 38 mit der Druckmittelausgangskammer 5 verbindbar ist. Eine sich am Teil 7 des ersten Relaiskolbenteiles 7, 8 abstützende Druckfeder 42 beaufschlagt einen am Ventilglied 44 angeordneten Federteller 46 und hält so das mit dem Dichtelement 45 versehene Ventilglied 44 auf dem Ventilsitz 6 des Einlassventils 6, 44, 45. An der der Druckmittelausgangskammer 5 zugewandten Seite des ersten Relaiskolbens 48 ist koaxial zu dem Ventilglied 44 ein Stössel 50 angeordnet, welcher an seinem dem Ventilglied 44 zugewandten Ende einen Dichtkörper 4 trägt. Der mit dem Dichtkörper 4 versehene Stössel 50 bildet mit dem das Dichtelement 45 tragenden Ventilglied 44 ein Auslassventil 50, 4, 44, 45, über welches die Druckmittelausgangskammer 5 mit der Atmosphäre verbindbar ist. Das Einlassventil 6, 44, 45 und das Auslassventil 50, 4, 44, 45 bilden zusammen ein kombiniertes Einlass- und Auslassventil, welches vom ersten Relaiskolben 48 und vom zweiten Relaiskolben betätigbar ist. Das freie Ende des Kolbenrohres 30 ragt in eine Entlüftungskammer 29, welche von einem zur Atmosphäre hin in die Offenstellung bringbaren Rückschlagventil 27, 28 verschlossen wird. Im freien Endbereich des Kolbenrohres 30 ist ein ringförmiger Anschlag 31 vorgesehen, welcher den Hub des mit dem Kolbenrohr 30 fest verbundenen zweiten Relaiskolbens 7, 8, 23 in Richtung auf den ersten Relaiskolben 48 zu begrenzt.

Zwischen den beiden Relaiskolbenteilen 7, 8 und 23 ist eine Wand 18 mit einer zentrisch angeordneten Ausnehmung vorgesehen, durch welche das Kolbenrohr 30 mittels eines Dichtringes 17 abgedichtet hindurchgeführt ist. Das zweite Relaiskolbenteil 23 trennt eine zweite Steuerkammer 35 von einer dritten Steuerkammer 24. Die dritte Steuerkammer 24 wird von der der Wand 18 abgewandten Seite des zweiten Relaiskolbenteiles 23 begrenzt, und die zweite Steuerkammer 35 wird von der der Wand 18 zugewandten Seite des zweiten Relaiskolbenteiles 23 begrenzt. Das zweite Relaiskolbenteil 23 weist einen in Umfangsrichtung verlaufenden Dichtring 22 auf, der die beiden Steuerkammern 35, 24 gegeneinander abdichtet. Ein das Ventilglied 44 aufnehmender Raum 40 im ersten Relaiskolbenteil 7, 8 steht über eine im Kolbenteil 7 des ersten Relaiskolbenteiles 7, 8 vorgesehene Ausnehmung 39 mit der Druckmitteleingangskammer 38 in Verbindung.

Zwischen der Wand 18 und dem ersten Relaiskolbenteil 7, 8 des zweiten Relaiskolbens 7, 8, 23 ist ein Steuerkolben 15 mittels eines ersten Dichtringes 13 gegen das Kolbenrohr 30, eines zweiten Dichtringes 16 gegen die Gehäusewandung 34 und eines dritten Dichtringes 19 gegen einen umlaufenden Vorsprung 20 der Wand 18 abgedichtet verschiebbar angeordnet. Der Steuerkolben 15 begrenzt mit seiner der Wand 18 zugewandten Wirkfläche eine vierte Steuerkammer 32 und mit seiner dem ersten Relaiskolbenteil 7, 8 zugewandten Wirkfläche die Druckmitteleingangskammer 38. Die vierte Steuerkammer 32 steht über einen Kanal 37 und einen an diesen anschliessenden weiteren Kanal 52 mit dem ersten Steueranschluss 47 in Verbindung. Denkbar ist auch eine Verbindung der vierten Steuerkammer 32 mit dem dritten Steueranschluss 33. Ein in die Druckmitteleingangskammer 38 hineinragender, in Richtung auf den Steuerkolben 15 zu abgewinkelter Gehäusevorsprung 53 begrenzt zusammen mit einem auf der der Druckmitteleingangskammer 38 zugewandten Wirkfläche angeordneten umlaufenden Vorsprung 21 des Steuerkolbens 15 einen als Drossel dienenden Spalt, der zum Beispiel als eine in den umlaufenden Vorsprung 21 des Steuerkolbens 15 in radialer Richtung verlaufende eingearbeitete Nut 54 ausgebildet sein kann. Mittels dieser Drossel ist der vom ersten Vorratsanschluss 41, 51 zur Druckmitteleingangskammer 38 führende Durchlass in seinem Querschnitt veränderbar. Der mit dem umlaufenden Vorsprung 21 des Steuerkolbens 15 zusammenwirkende Gehäusevorsprung 53 ist so ausgebildet und so angeordnet, dass bei einem Drosselvorgang zwischen der Druckmitteleingangskammer 38 und dem ersten Vorratsanschluss 41 der Öffnungsquerschnitt zwischen dem ebenfalls mit der Druckmitteleingangskammer 38 verbundenen zweiten Vorratsanschluss 14 nicht verändert wird.

Die Druckmitteleingangskammer 38 ist als Ringkammer ausgebildet, so dass der erste Vorratsanschluss 41 und der zweite Vorratsanschluss 14 unter Umgehung des kombinierten Einlass- und Auslassventils ständig miteinander verbunden sind. Der erste Vorratsanschluss 41 ist an eine Vorratsleitung des Zugfahrzeugs und der zweite Vorratsanschluss 14 ist an die Anhänger-Vorratsleitung anschliessbar. Das erste Relaiskolbenteil 7, 8 weist einen Dichtring 11 auf, welcher die Druckmitteleingangskammer 38 gegen die Druckmittelausgangskammer 5 und gegen den Druckmittelausgang 10 abdichtet. Über einen dritten Steueranschluss 33 ist die dritte Steuerkammer 24 mit einem zweiten Bremskreis des Motorfahrzeuges verbunden. Die zweite Steuerkammer 35 ist über einen zweiten Steueranschluss 36 an ein entlüftendes Handbremsventil oder eine Vorratsleitung des Zugfahrzeuges anschliessbar.

Die Funktion des im vorstehenden beschriebenen Anhänger-Steuerventils wird nachfolgend näher erläutert.

Bei Betätigung des Motorwagen-Bremsventils strömt Druckluft vom ersten Bremskreis über den ersten Steueranschluss 47 in die erste Steuerkammer 2. Der sich in der Steuerkammer 2 aufbauende Druck verschiebt den ersten Relaiskolben 48 in Richtung auf den zweiten Relaiskolben 7, 8 zu. Dabei setzt das mit dem Stössel 50 verbundene Dichtelement 4 auf das Ventilglied 44 auf. Das Auslassventil 4, 50, 44 ist jetzt geschlossen, und das Einlassventil 6, 44, 45 gelangt bei der weiteren Abwärtsbewegung des ersten Relaiskolbens 48 in die Offenstellung. Die in der Druckmitteleingangskammer 38 anstehende Druckluft gelangt durch das geöffnete Einlassventil 6, 44, 45 des kombinierten Einlass- und Auslassventils 6, 44, 45, 50, 4 in die Druckmittelausgangskammer 5 und weiter durch den Druckmittelausgang 10 und die Anhänger-Bremsleitung zum hier nicht gezeigten Anhänger-Bremsventil. Über die Druckmitteleingangskammer 38 steht der erste Vorratsanschluss 41 ständig mit dem mit der Vorratsleitung verbundenen zweiten Vorratsanschluss 14 in Verbindung. Der Steuerkolben 15 wird vom Vorratsdruck in der Druckmitteleingangskammer 38 in einer Stellung gehalten, in welcher die Drossel 21, 53, 54 unwirksam ist. Über die Kanäle 52 und 37 wird die vierte Steuerkammer 32 mit dem Steuerdruck vom ersten Steuereingang 47, d.h. mit dem Druck aus dem ersten Bremskreis des Zugfahrzeugs, beaufschlagt. Da die vom Vorratsdruck in der Druckmitteleingangskammer 38 beaufschlagte Wirkfläche des Steuerkolbens 15 grösser ist als die vom Steuerdruck aus der vierten Steuerkammer 32 beaufschlagte Wirkfläche des Steuerkolbens, wird der Steuerkolben 15 auch weiterhin in der Stellung gehalten, in welcher die Drossel 21, 53, 54 unwirksam ist. Über den zweiten Steueranschluss 36 ist die zweite Steuerkammer 35 mit dem Handbremsventil des Motorfahrzeuges verbunden. Der sich in der Druckmittelausgangskammer 5 aufbauende Druck beaufschlagt die der ersten Steuerkammer 2 abgewandte Seite des ersten Relaiskolbens 48 und bewegt diesen gegen die vom Druck in der ersten Steuerkammer 2 auf den ersten Relaiskolben 48 einwirkende entgegengerichtete Kraft in Richtung auf die erste Steuerkammer 2 zu.

Das Einlassventil 6, 44, 45 gelangt in die Schliessstellung, und eine Abschlussstellung ist erreicht. Gleichzeitig mit den im vorstehenden beschriebenen Vorgängen erfolgt vom zweiten Bremskreis über den dritten Steueranschluss 33 eine Belüftung der dritten Steuerkammer 24 und somit eine Druckbeaufschlagung des zweiten Relaiskolbenteiles 23 in Richtung auf die zweite Steuerkammer 35 zu. Da jedoch die Kraft des in der Druckmittelausgangskammer 5 anstehenden und das erste Relaiskolbenteil 7, 8 beaufschlagenden Druckes und die Kraft des in der zweiten Steuerkammer 35 vom Handbremsventil anstehenden und das zweite Relaiskolbenteil beaufschlagenden Druckes überwiegen, verändert sich die Lage des zweiten Relaiskolbens 7, 8, 23 nicht.

Fällt durch einen Defekt der erste Bremskreis des Motorfahrzeuges aus, so verschiebt der in der dritten Steuerkammer 24 aus dem zweiten Bremskreis anstehende Druck das zweite Relaiskolbenteil 23 nach oben in Richtung auf die zweite Steuerkammer 35 zu. Das über das Kolbenrohr 30 mit dem zweiten Relaiskolbenteil 23 verbundene erste Relaiskolbenteil 7, 8 wird vom zweiten Relaiskolbenteil 23 in Richtung auf die Druckmittelausgangskammer 5 zu verschoben. Dabei gelangt das Einlassventil 6, 44, 45 in die Offenstellung. Über den Druckmittelausgang 10 wird Druckluft in die Anhänger-Bremsleitung abstufbar eingesteuert.

Wird die erste Steuerkammer 2 entlüftet, so überwiegt der Druck in der Druckmittelausgangskammer 5. Der erste Relaiskolben 48 führt nach oben in Richtung auf die erste Steuerkammer 2 zu und öffnet so das Auslassventil 4, 44, 45. Die Anhänger-Bremsleitung wird über den Druckmittelausgang 10, die Druckmittelausgangskammer 5, das geöffnete Auslassventil 4, 44, 45 sowie durch das Kolbenrohr 30 und das Rückschlagventil 28 zur Atmosphäre hin entlüftet. Der zweite Vorratsanschluss 14 bleibt weiterhin über die Druckmitteleingangskammer 38 mit dem ersten Vorratsanschluss 41 verbunden.

Bei einem Bruch der Anhänger-Bremsleitung während eines Bremsvorganges sinkt der Druck in der Druckmittelausgangskammer 5 ab. Der erste Relaiskolben 48 fährt nach unten in Richtung auf das erste Relaiskolbenteil 7, 8 des zweiten Relaiskolbens 7, 8, 23 zu. Das Auslassventil 4, 44, 45 schliesst, und das Einlassventil 6, 44, 45 gelangt in die Offenstellung. Der Druck in der Druckmitteleingangskammer 38 baut sich über das Einlassventil 6, 44, 45 sowie die Auslasskammer 5, den Ausgang 10 und die Bruchstelle an der Anhänger-Bremsleitung schnell ab. Da jetzt der Steuerdruck in der vierten Steuerkammer 32 überwiegt, wird der Steuerkolben 15 nach oben in Richtung auf die Druckmitteleingangskammer 38 zu verschoben. Der umlaufende Vorsprung 21 des Steuerkolbens 15 kommt am Gehäusevorsprung 53 zur Anlage. Die weitere Belüftung der Druckmitteleingangskammer mit Vorratsdruck erfolgt jetzt nur noch gedrosselt über den Spalt 54.

Der Druck aus der Anhänger-Vorratsleitung baut sich über den zweiten Vorratsanschluss 14, den daran anschliessenden mit der Druckmitteleingangskammer 38 verbundenen Raum 12, das geöffnete Einlassventil 6, 44, 45, die Ausgangskammer 5 sowie den Ausgang 10 und die Bruchstelle der Anhänger-Bremsleitung zur Atmosphäre hin sehr schnell ab.

Die eingangs erwähnte Forderung, dass nach Bruch der Anhänger-Bremsleitung der Druck in der Vorratsleitung zum Anhänger auf höchstens 1,5 bar innerhalb von 2 Sekunden nach dem Betätigen des Motorwagen-Bremsventils abgesunken sein muss, wird jetzt erfüllt. Der sich in der Anhänger-Vorratsleitung abbauende Druck führt somit zur Zwangsbremsung des Anhängers.

Denkbar ist es auch, dass der vom ersten Vorratsanschluss 41 zur Druckmitteleingangskammer 38 führende Durchlass 51 so angeordnet ist, dass der Steuerkolben 15 oder ein mit dem Steuerkolben 15 zusammenwirkendes Teil sich bei Abriss der Anhänger-Bremsleitung vor den Durchlass 51 schiebt und dessen Querschnitt verringert.

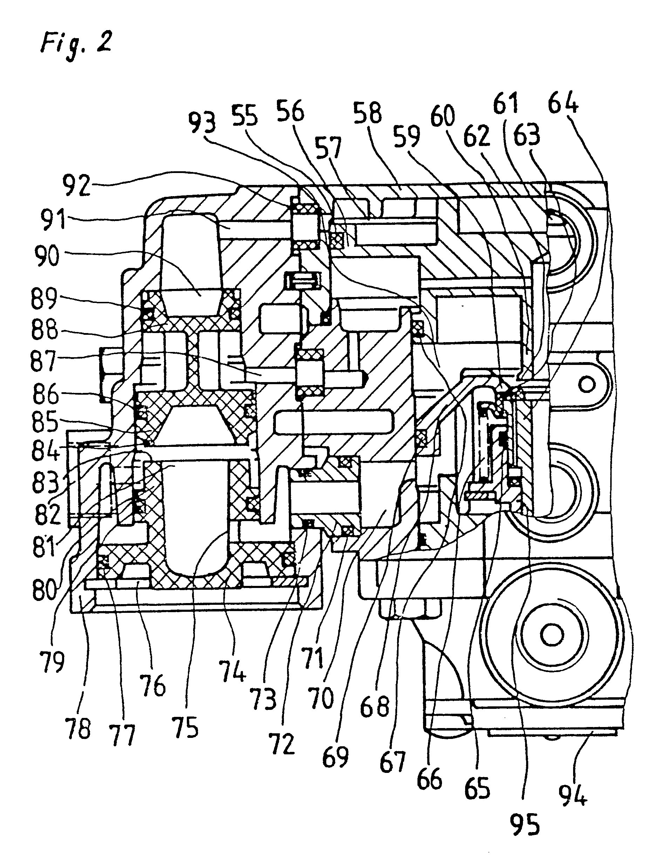

Figur 2 zeigt ein Anhänger-Steuerventil mit einer angeflanschten schaltbaren Drossel. Der besseren Übersicht halber werden nur die Teile des Anhänger-Steuerventils beschrieben, die zur Erläuterung der Funktion der Drossel im Zusammenwirken mit dem Anhänger-Steuerventil erforderlich sind.

In einem als Ventilgehäuse dienenden ersten Gehäuse 58 ist ein erster Relaiskolben 56 angeordnet, welcher eine Steuerkammer 57 von einer Druckmittelausgangskammer 93 trennt. Die Steuerkammer 57 ist über einen Steueranschluss 61 mit einem ersten Bremskreis des Motorfahrzeuges verbunden. Über einen nicht dargestellten Druckmittelausgang steht die Druckmittelausgangskammer 93 mit einer zum Anhänger-Bremsventil eines Anhängerfahrzeuges führenden Anhänger-Bremsleitung in Verbindung. Der Relaiskolben 56 weist zwei in Umfangsrichtung verlaufende Dichtringe 67, 55 auf, welche verhindern, dass Druckmittel aus der Steuerkammer 57 und aus der Ausgangskammer 93 in die Atmosphäre gelangt. Unterhalb des ersten Relaiskolbens 56 ist ein aus zwei miteinander verbundenen Teilen bestehender zweiter Relaiskolben angeordnet, von dem lediglich das obere Teil 68 dargestellt ist. Ein auf der Umfangsfläche des oberen Teiles 68 des zweiten Relaiskolbens 68 angeordneter Dichtring 69 dichtet die Druckmittelausgangskammer 93 gegen eine gegenüberliegende auf der anderen Seite des zweiten Relaiskolbens 68 angeordnete Druckmitteleingangskammer 70 ab. Im zweiten Relaiskolben 68 ist zentrisch eine Ausnehmung angeordnet, die im oberen Teil 68 des zweiten Relaiskolbens 68 als Ventilsitz 59 ausgebildet ist. Das untere Teil des zweiten Relaiskolbens 68 ist mit einem abgestuften Kolbenrohr 95 verbunden. Das freie Ende des Kolbenrohres 95 wird in einer Ausnehmung des Ventilgehäusebodens abgedichtet geführt und mündet in einer von einem Rückschlagventil 94 verschlossenen, zur Atmosphäre hin führenden Entlüftungskammer.

Im Kolbenrohr 95 ist ein mit einem Dichtring 65 versehener, als Ventilglied 64 ausgebildeter zylindrischer Hohlkörper befestigt, der auf seiner dem Ventilsitz 59 zugewandten Seite ein Dichtelement 63 trägt. Das mit dem Dichtelement 63 versehene Ventilglied 64 bildet mit dem Ventilsitz 59 ein Einlassventil 59, 63, 64, über welches die Druckmitteleingangskammer 70 mit der Druckmittelausgangskammer 93 verbindbar ist. Eine sich am unteren Teil des zweiten Relaiskolbens 68 abstützende Druckfeder 66 beaufschlagt einen am Ventilglied 64 angeordneten Federteller und hält so das mit dem Dichtelement 63 versehene Ventilglied 64 auf dem Ventilsitz 59 des Einlassventils 59, 63, 64. An der der Druckmittelausgangskammer 93 zugewandten Seite des ersten Relaiskolbens 56 ist koaxial zu dem Ventilglied 64 ein Stössel 60 angeordnet, welcher an seinem dem Ventilglied 64 zugewandten Ende einen Dichtkörper 62 trägt. Der mit dem Dichtkörper 62 versehene Stössel 60 bildet mit dem das Dichtelement 63 tragenden Ventilglied 64 ein Auslassventil 60, 62, 63, 64, über welches die Druckmittelausgangskammer 93 mit der Atmosphäre verbindbar ist. Das Einlassventil 59, 63, 64 und das Auslassventil 60, 62, 63, 64 bilden zusammen ein kombiniertes Einlass- und Auslassventil, welches vom ersten Relaiskolben 56 und vom zweiten Relaiskolben 68 betätigbar ist. Ein das Ventilglied 64 aufnehmender Raum im zweiten Relaiskolben 68 steht über eine im zweiten Relaiskolben 68 vorgesehene Ausnehmung mit der Druckmitteleingangskammer 70 in Verbindung. Die Druckmitteleingangskammer 70 ist als Ringkammer ausgebildet, so dass ein mit der Vorratsleitung des Zugfahrzeugs verbundener erster Vorratsanschluss und ein zweiter hier nicht dargestellter Vorratsanschluss für die Anhänger-Vorratsleitung unter Umgehung des kombinierten Einlass- und Auslassventils ständig miteinander verbunden sind.

An das erste Gehäuse 58 ist ein zweites Gehäuse 78 angeflanscht, welches eine abgestufte Ausnehmung aufweist, in welcher ein Steuerkolben 85, 88 mittels Dichtringen 86, 89 abgedichtet verschiebbar angeordnet ist. Der Steuerkolben 85, 88 weist zwei einander entgegengerichtete Wirkflächen 88 und 85 auf, wobei die eine Wirkfläche 88 eine Steuerkammer 90 begrenzt, welche über einen Kanal 91 mit der von dem im ersten Gehäuse 58 angeordneten Relaiskolben 56 begrenzten Steuerkammer 57 verbunden ist. Die der die Steuerkammer 90 begrenzenden Wirkfläche 88 entgegengerichtete Wirkfläche 85 des Steuerkolbens 85, 88, begrenzt eine als Druckmitteleingangskammer 81 dienende Kammer, welche über einen im zweiten Gehäuse 78 vorgesehenen Kanal 75 sowie einen Druckmittelanschluss 72 mit der im ersten Gehäuse 58 angeordneten Druckmitteleingangskammer 70 verbunden ist.

Die Druckmitteleingangskammer 81 wird auf ihrer dem Steuerkolben 85, 88 gegenüberliegenden Seite von einem mit einem Dichtring 77 versehenen Gehäusedeckel 74 verschlossen, der mittels eines Sicherungsringes 76 am Gehäuse 78 gehalten wird. Der Gehäusedeckel 74 weist einen sich in die Druckmitteleingangskammer 81 hineinerstreckenden ringförmigen Vorsprung 80 auf, dessen Ringfläche zusammen mit einem an der die Druckmitteleingangskammer 81 begrenzenden Wirkfläche 85 des Steuerkolbens 85, 88 angeordneten umlaufenden Vorsprung einen als Drossel dienenden Spalt bildet, der z.B. als eine in den umlaufenden Vorsprung des Steuerkolbens 85, 88 in radialer Richtung verlaufende eingearbeitete Nut 84 ausgebildet sein kann. Die im zweiten Gehäuse 78 angeordnete Druckmitteleingangskammer 81 steht über einen ersten Vorratsanschluss 82 mit der Vorratsleitung des Zugfahrzeuges in Verbindung. Mittels der Drossel ist der vom ersten Vorratsanschluss 82 zur Druckmitteleingangskammer 81 führende Durchlass in seinem Querschnitt veränderbar. Der ringförmige Vorsprung 80 ist mittels eines Dichtringes 79 gegen die Gehäusewandung abgedichtet, so dass das vom ersten Vorratsanschluss 82 kommende Druckmittel ausschliesslich durch den Durchlassquerschnitt der Drossel 85, 84, 83 in die Druckmitteleingangskammer 81 gelangen kann. Die über den Druckmittelanschluss 72 und den Kanal 75 miteinander verbundenen Druckmitteleingangskammern 81, 70 des den Steuerkolben 85, 88 aufnehmenden Gehäuses und des den Relaiskolben 56 aufnehmenden Gehäuses 58 bilden funktionsmässig eine gemeinsame Druckmitteleingangskammer, welche über die schaltbare Drossel und den ersten Vorratsanschluss 82 an die Vorratsleitung des Zugfahrzeugs angeschlossen ist. Dies trifft auch dann zu, wenn die schaltbare Drossel nicht direkt an das Gehäuse des Anhänger-Steuerventils angeflanscht, sondern in die Vorratsleitung des Zugfahrzeugs geschaltet ist. Der die beiden Druckmitteleingangskammern 70 und 81 miteinander verbindende Druckmittelanschluss 72 ist mittels Dichtringen 71 und 73 gegen die die entsprechenden Gehäuseausnehmungen begrenzenden Wandungen des ersten Gehäuses 58 und des zweiten Gehäuses 78 abgedichtet. In gleicher Weise ist der die vom Relaiskolben 56 begrenzte Steuerkammer des ersten Gehäuses 58 und die im zweiten Gehäuse 78 angeordnete vom Steuerkolben 85, 88 begrenzte Steuerkammer 90 verbindende Kanal 91 gegen die Nahtstelle zwischen den beiden Gehäusen 58 und 78 abgedichtet. Eine Atmungsbohrung 87 verbindet den zwischen den beiden Kolbenteilen 88 und 85 des Steuerkolbens 88, 85 verbleibenden Raum mit der Atmosphäre.

Die Funktion des im vorstehenden beschriebenen Anhänger-Steuerventils wird nachfolgend näher erläutert.

Bei Betätigung des Motorwagen-Bremsventils strömt Druckluft vom ersten Bremskreis des Zugfahrzeugs in die vom Relaiskolben 56 begrenzte Steuerkammer 57. Der sich in der Steuerkammer 57 aufbauende Druck verschiebt den ersten Relaiskolben 56 in Richtung auf den zweiten Relaiskolben 68 zu. Dabei setzt das mit dem Stössel 60 verbundene Dichtelement 62 auf das Ventilglied 63, 64 auf. Das Auslassventil 62, 63, 64 ist jetzt geschlossen, und das Einlassventil 63, 64, 59 gelangt bei der weiteren Abwärtsbewegung des ersten Relaiskolbens 56 in die Offenstellung. Die in der Druckmitteleingangskammer 70 des Anhänger-Steuerventils (Gehäuse 58) sowie in der Druckmitteleingangskammer 81 der schaltbaren Drossel (Gehäuse 78) anstehende Druckluft gelangt durch das geöffnete Einlassventil 59, 63, 64 des kombinierten Einlass- und Auslassventils 59, 63, 64, 62 in die Druckmittelausgangskammer 93 und weiter durch den Druckmittelausgang und die Anhänger-Bremsleitung zum hier nicht gezeigten Anhängerbremsventil. Über die Druckmitteleingangskammer 81 der schaltbaren Drossel und die Druckmitteleingangskammer 70 des Anhänger-Steuerventils steht der erste Vorratsanschluss 82 ständig mit dem mit der Vorratsleitung des Anhängerfahrzeugs verbundenen zweiten Vorratsanschluss in Verbindung. Der Steuerkolben 85, 88 wird vom Vorratsdruck in der Druckmitteleingangskammer 81 der schaltbaren Drossel in einer Stellung gehalten, in welcher die Drossel 85, 84, 83 unwirksam ist. Über den Kanal 91 wird die Steuerkammer 90 aus der Steuerkammer 57 des Anhänger-Steuerventils mit dem Druck aus dem ersten Bremskreis des Zugfahrzeugs beaufschlagt. Da die vom Vorratsdruck in der Druckmitteleingangskammer 81 beaufschlagte Wirkfläche 85 des Steuerkolbens 85, 88 grösser ist als die vom Steuerdruck aus der Steuerkammer 90 beaufschlagte Wirkfläche 88 des Steuerkolbens 85, 88 wird der Steuerkolben 85, 88 auch weiterhin in der Stellung gehalten, in welcher die Drossel 85, 84, 83 unwirksam ist. Der sich in der Druckmittelausgangskammer 93 des Anhänger-Steuerventils aufbauende Druck beaufschlagt die der Steuerkammer 57 des Anhänger-Steuerventils abgewandte Seite des ersten Relaiskolbens 56 und bewegt diesen gegen die vom Druck in der Steuerkammer 57 auf den Relaiskolben 56 einwirkende entgegengerichtete Kraft in Richtung auf die Steuerkammer 57 zu. Das Einlassventil 59, 63, 64 gelangt in die Schliessstellung, und eine Abschlussstellung ist erreicht.

Bei einem Bruch der Anhänger-Bremsleitung während eines Bremsvorganges sinkt der Druck in der Druckmittelausgangskammer 93 sowie in der Druckmitteleingangskammer 70 und in der Druckmitteleingangskammer 81 ab. Der Druck in den Druckmitteleingangskammern 70, 81 baut sich über das Einlassventil 59, 63, 64 sowie die Druckmittelausgangskammern 93, den Druckmittelausgang und die Bruchstelle an der Anhänger-Bremsleitung schnell ab. Da jetzt der Steuerdruck in der Steuerkammer 57 des Anhänger-Steuerventils und in der Steuerkammer 90 der schaltbaren Drossel überwiegt, wird der Steuerkolben 85, 88 nach unten in Richtung auf die Druckmitteleingangskammer 81 der schaltbaren Drossel zu verschoben. Der umlaufende Vorsprung des Steuerkolbens 85, 88 kommt am ringförmigen Gehäusevorsprung 83, 80 zur Anlage. Die weitere Belüftung der Druckmitteleingangskammer 81 der schaltbaren Drossel und somit auch der Druckmitteleingangskammer 70 des Anhänger-Steuerventils erfolgt jetzt nur noch gedrosselt über den Spalt 84.

Der Druck aus der Anhänger-Vorratsleitung baut sich über den zweiten Vorratsanschluss, den daran anschliessenden mit der Druckmitteleingangskammer 70 des Anhänger-Steuerventils verbundenen Raum, das geöffnete Einlassventil 59, 63, 64, die Druckmittelausgangskammer 93 sowie den Ausgang und die Bruchstelle der Anhänger-Bremsleitung zur Atmosphäre hin sehr schnell ab.

Die eingangs erwähnte Forderung, dass nach Bruch der Anhänger-Bremsleitung der Druck in der Vorratsleitung zum Anhänger auf höchstens 1,5 bar innerhalb von 2 Sekunden nach dem Betätigen des Motorwagen-Bremsventils abgesunken sein muss, wird jetzt erfüllt. Der sich in der Anhängervorratsleitung abbauende Druck führt somit zur Zwangsbremsung des Anhängers.

Es ist auch möglich, den Steuerkolben mittels Federkraft in Öffnungsrichtung der schaltbaren Drossel zu belasten.

Denkbar ist es auch, dass der vom ersten Vorratsanschluss 82 zur Druckmitteleingangskammer 81 der schaltbaren Drossel führende Durchlass so angeordnet ist, dass der Steuerkolben 85, 88 oder ein mit dem Steuerkolben 85, 88 zusammenwirkendes Teil sich bei Abriss der Anhänger-Bremsleitung vor den Durchlass schiebt und dessen Querschnitt verringert.

Die Erfindung ist selbstverständlich nicht nur bei einem Anhänger-Steuerventil anwendbar, wie es in den Ausführungsbeispielen beschrieben ist, sondern auch bei Anhänger-Steuerventilen für einkreisige Bremsanlagen mit oder ohne zusätzlichem Anschluss für ein entlüftendes Bremsventil.

**Patentansprüche**

1. Anhänger-Steuerventil für eine druckluftbetätigte Zweileitungs-Bremsanlage mit einer zwischen dem Zugfahrzeug und dem Anhängerfahrzeug angeordneten Anhänger-Vorratsleitung und mit einer ebenfalls zwischen dem Zugfahrzeug und dem Anhängerfahrzeug angeordneten Anhänger-Bremsleitung mit folgenden Merkmalen:
a) es ist eine Druckmittelausgangskammer (5) zur Speisung der Anhänger-Bremsleitung vorgesehen;
b) die Druckmittelausgangskammer (5) ist über ein kombiniertes Einlass- und Auslassventil (45, 6, 4) mit einer Druckmitteleingangskammer (38) oder mit der Atmosphäre verbindbar;
c) die Druckmitteleingangskammer (38) ist einerseits über eine aus einer ungedrosselten Betriebsstellung heraus zu kleineren Durchlassquerschnitten hin veränderbare Drossel (53, 21) und einen ersten Vorratsanschluss (41) mit einer Vorratsleitung des Zugfahrzeuges und andererseits über einen zweiten Vorratsanschluss (14) mit der Anhänger-Vorratsleitung verbunden;
d) zur Betätigung des kombinierten Einlass- und Auslassventils (45, 6, 4) ist wenigstens ein von einem Steuerdruck beaufschlagbarer Relaiskolben (48) vorgesehen;
e) zur Betätigung der in ihrem Durchlassquerschnitt veränderbaren Drossel (53, 21) ist ein Steuerkolben (15) vorgesehen, der zwei Wirkflächen aufweist, wobei die auf die beiden Wirkflächen einwirkenden Drücke auf den Steuerkolben (15) einander entgegengerichtete Kräfte ausüben;
f) der Steuerkolben (15) ist so angeordnet, dass die eine Wirkfläche von dem den Relaiskolben (48) beaufschlagenden Steuerdruck beaufschlagt wird; dadurch gekennzeichnet, dass der Steuerkolben (15) so angeordnet ist, dass die andere Wirkfläche vom Druck aus der Druckmitteleingangskammer (38) beaufschlagt wird.

2. Anhänger-Steuerventil nach Anspruch 1, dadurch gekennzeichnet, dass wenigstens zwei Gehäuse bzw. Gehäuseteile (58, 78) vorgesehen sind, von denen das eine Gehäuseteil (58) zur Aufnahme des Relaiskolbens (56) dient und von denen das andere Gehäuseteil (78) zur Aufnahme des Steuerkolbens (88, 85) vorgesehen ist.

3. Anhänger-Steuerventil nach Anspruch 2, dadurch gekennzeichnet, dass die beiden Gehäuseteile (58, 78) nebeneinander angeordnet sind.

4. Anhänger-Steuerventil nach wenigstens einem der vorhergehenden Ansprüche, dadurch gekennzeichnet, dass das den Steuerkolben (85, 88) aufnehmende Gehäuseteil (58) angeflanscht ist.

5. Anhänger-Steuerventil nach wenigstens einem der vorhergehenden Ansprüche, dadurch gekennzeichnet, dass die Drossel (85, 84, 83) in demselben Gehäuse (78) angeordnet ist, in dem auch der Steuerkolben (88) angeordnet ist.

6. Anhänger-Steuerventil nach wenigstens einem der vorhergehenden Ansprüche, gekennzeichnet durch die folgenden Merkmale
a) die Drossel wird von einem beweglich angeordneten Drosselglied (85) und einem in dem das Drosselglied (85) aufnehmenden Gehäuse (78) angeordneten gehäusefesten Vorsprung (80) gebildet;
b) das Drosselglied (85) steht mit dem Steuerkolben (88) in Wirkverbindung, derart, dass es vom Steuerkolben (88) auf den gehäusefesten Vorsprung (80) zu bewegbar ist;
c) der gehäusefeste Vorsprung (80) begrenzt eine mit dem ersten Vorratsanschluss (82) verbundene Druckmitteleingangskammer (81);

d) die Druckmitteleingangskammer (81) des die Drossel aufnehmenden Gehäuses (78) ist mit der Druckmitteleingangskammer (70) des den Relaiskolben (56) sowie das kombinierte Einlass- und Auslassventil (59, 62, 63, 64) enthaltenden Gehäuses (58) ständig verbunden.

7. Anhänger-Steuerventil nach Anspruch 1, dadurch gekennzeichnet, dass der Steuerkolben (15) zur Betätigung der Drossel (53, 21) in dem Gehäuse bzw. in dem Gehäuseteil (1) angeordnet ist, in welchem auch der erste Relaiskolben (7, 8) angeordnet ist.

8. Anhänger-Steuerventil nach wenigstens einem der vorhergehenden Ansprüche, dadurch gekennzeichnet, dass der Steuerkolben (15, 85, 88) so angeordnet ist, dass er mit wenigstens einem Teil seiner anderen Wirkfläche die Druckmitteleingangskammer (38, 81) begrenzt.

9. Anhänger-Steuerventil nach wenigstens einem der vorhergehenden Ansprüche, dadurch gekennzeichnet, dass der Steuerkolben (15, 85, 88) zusammen mit einem zur Druckmitteleingangskammer (38, 81) hin führenden Durchlass (51, 82) für den von der Vorratsleitung des Zugfahrzeugs kommenden Druck die veränderbare Drossel bildet.

10. Anhänger-Steuerventil nach wenigstens einem der vorhergehenden Ansprüche, dadurch gekennzeichnet, dass der Steuerkolben (15, 85, 88) auf seiner der Druckmitteleingangskammer (38, 81) zugewandten Seite ein Drosselglied (21, 54, 85, 84) aufweist, das mit einem Drosselglied (53, 80, 83) des Gehäuses die Drossel bildet.

11. Anhänger-Steuerventil nach wenigstens einem der vorhergehenden Ansprüche, dadurch gekennzeichnet, dass die beiden Wirkflächen des Steuerkolbens (15, 85, 88) so bemessen sind, dass der Steuerkolben (15, 85, 88) bei einem evtl. in der Druckmitteleingangskammer (38, 81) auftretenden Druckabfall während einer Bremsdruckeinsteuerung in die Anhänger-Bremsleitung bei intakter Bremsanlage vom Steuerdruck nicht in eine den Durchlassquerschnitt der Drossel (53, 21, 84, 83) verkleinernde Stellung gebracht wird.

12. Anhänger-Steuerventil nach Anspruch 1 und Anspruch 2 für eine mit einem entlüftenden Bremsventil versehene Bremsanlage, gekennzeichnet durch die folgenden Merkmale:

a) es ist ein zweiter Relaiskolben (7, 8, 23) vorgesehen, welcher aus einem ersten Relaiskolbenteil (7, 8) und einem zweiten Relaiskolbenteil (23) besteht, wobei die beiden Relaiskolbenteile (7, 8, 23) hintereinander geschaltet und fest miteinander verbunden sind;

b) das erste Relaiskolbenteil (7, 8) des zweiten Relaiskolbens (7, 8, 23) weist einen Ventilsitz (6) auf und bildet zusammen mit einem Ventilkörper (45) und einem weiteren Ventilsitz (4) das vom ersten Relaiskolben (48) betätigbare kombinierte Einlass- und Auslassventil (45, 6, 4) für die Druckmittelausgangskammer (5);

c) das erste Relaiskolbenteil (7, 8) des zweiten Relaiskolbens (7, 8, 23) begrenzt die Druckmitteleingangskammer (38);

d) das zweite Relaiskolbenteil (23) des zweiten Relaiskolbens (7, 8, 23) begrenzt eine zweite Steuerkammer (35), die über das entlüftende Bremsventil mit einem Hilfsbremskreis verbunden ist;

e) die auf das erste Relaiskolbenteil (7, 8) vom Druck aus der Druckmitteleingangskammer (38) ausgeübte Kraft ist der auf das zweite Relaiskolbenteil (23) vom Druck aus der zweiten Steuerkammer (35) ausgeübten Kraft entgegengerichtet.

13. Anhänger-Steuerventil nach Anspruch 12 für eine druckluftbetätigte Zweikreis-Bremsanlage, dadurch gekennzeichnet, dass die der zweiten Steuerkammer (35) abgewandte Seite des zweiten Relaiskolbenteils (23) des zweiten Relaiskolbens (7, 8, 23) eine dritte Steuerkammer (24) begrenzt, die mit einem zweiten Bremskreis des Zugfahrzeuges verbunden ist;

14. Anhänger-Steuerventil nach wenigstens einem der vorhergehenden Ansprüche, dadurch gekennzeichnet, dass die vom Steuerkolben (15) begrenzte Steuerkammer (32) mit dem den ersten Relaiskolben (48) beaufschlagenden Steuerdruck beaufschlagt wird.

15. Anhänger-Steuerventil nach wenigstens einem der vorhergehenden Ansprüche, dadurch gekennzeichnet, dass die vom Steuerkolben (15) begrenzte Steuerkammer (32) vom Druck aus dem zweiten Bremskreis beaufschlagt wird.

16. Anhänger-Steuerventil nach wenigstens einem der vorhergehenden Ansprüche, dadurch gekennzeichnet, dass die veränderbare Drossel von einem in die Druckmitteleingangskammer (38, 81) hineinragenden Gehäusevorsprung (53, 80, 84) und wenigstens einem Teil der die Druckmitteleingangskammer (38, 81) begrenzenden Wirkfläche des Steuerkolbens (15, 85, 88) gebildet wird, wobei der Gehäusevorsprung (53, 80, 84) derart angeordnet ist, dass das durch den Durchlass (51, 82) in Richtung auf die Druckmitteleingangskammer (38, 81) zu strömende Druckmittel durch den Spalt zwischen Gehäusevorsprung (53, 80, 84) und dem Steuerkolben (15, 85, 88) hindurchströmt.

17. Anhänger-Steuerventil nach Anspruch 16, dadurch gekennzeichnet, dass auf der der Druckmitteleingangskammer (38, 81) zugewandten Seite des Steuerkolbens (15, 85, 88) ein umlaufender Vorsprung (21) vorgesehen ist, welcher derart angeordnet ist, dass er bei einer Bewegung des Steuerkolbens (15, 85, 88) in Richtung auf den Gehäusevorsprung (53, 80, 84) zu am Gehäusevorsprung (53, 80, 84) zur Anlage bringbar ist.

18. Anhänger-Steuerventil nach Anspruch 17, dadurch gekennzeichnet, dass in dem auf dem Steuerkolben (15, 85, 88) angeordneten umlaufenden Vorsprung (21) eine sich in radialer Richtung erstreckende Ausnehmung (54, 84) vorgesehen ist.

19. Anhänger-Steuerventil nach wenigstens einem der vorhergehenden Ansprüche, gekennzeichnet durch die folgenden Merkmale:

a) der Durchlass wird von einer die Druckmitteleingangskammer (38, 81) mit einem ersten Vor-ratsanschluss (41, 82) verbindenden Gehäuse-ausnehmung (51) gebildet;

b) an der der Druckmitteleingangskammer (38, 81) zugewandten Seite des Steuerkolbens (15, 85, 88) ist ein Vorsprung vorgesehen, welcher bei einer Bewegung des Steuerkolbens (15, 85, 88) in Richtung von der Steuerkammer (32, 90) weg auf den Durchlass (51) zu bewegbar ist.

20. Anhänger-Steuerventil nach wenigstens einem der vorhergehenden Ansprüche, dadurch gekennzeichnet, dass die vom Steuerkolben (15) betätigbare Drossel bzw. der mit dem Steuerkolben (15) eine Drossel bildende, in seinem Querschnitt veränderbare Durchlass im Bereich des zweiten Vorratsanschlusses (14) vorgesehen ist.

21. Anhänger-Steuerventil nach wenigstens einem der vorhergehenden Ansprüche, dadurch gekennzeichnet, dass eine Feder vorgesehen ist, welche den Steuerkolben in Öffnungsrichtung der schaltbaren Drossel beaufschlagt.

## Claims

1. A trailer control valve for a compressed air-operated dual line brake system with a trailer supply line arranged between the towing vehicle and the trailer vehicle and with a trailer brake line likewise arranged between the towing vehicle and the trailer vehicle, having the following features,

a) a pressure medium outlet chamber (5) is provided for feeding the trailer brake line;

b) the pressure medium outlet chamber (5) can be connected via a combined inlet and outlet valve (45, 6, 4) to a pressure medium inlet chamber (38) or to the atmosphere;

c) the pressure medium inlet chamber (38) is connected on the one hand via a throttle (53, 21) which is variable from an unthrottled operating position to smaller cross-sections and via a first supply connection (41) to a supply line of the towing vehicle, and on the other hand via a second supply connection (14) to the trailer supply line;

d) to operate the combined inlet and outlet valve (45, 6, 4) at least one relay piston (48) which can be loaded by a control pressure is provided;

e) to operate the throttle (53, 21) of variable aperture cross-section there is provided a control piston (15) which has two active faces, wherein the pressures acting on the two active faces exert opposing forces on the control piston (15);

f) the control piston (15) is so arranged that the one active face is loaded by the control pressure acting on the relay piston (48); characterized in that the control piston (15) is so arranged that the other active face is loaded by the pressure from the pressure medium inlet chamber (38).

2. A trailer control valve according to claim 1, characterized in that at least two housings or housing parts (58, 78) are provided, of which one housing part (58) serves to receive the relay piston (56) and the other housing part (78) is provided for receiving the control piston (88, 85).

3. A trailer control valve according to claim 2, characterized in that the two housing parts (58, 78) are arranged side by side.

4. A trailer control valve according to at least one of the preceding claims, characterized in that the housing part (78) receiving the control piston (85, 88) is flange-mounted on the housing part (58) receiving the relay piston (56).

5. A trailer control valve according to at least one of the preceding claims, characterized in that the throttle (85, 84, 83) is arranged in the same housing (78) in which also the control piston (88) is arranged.

6. A trailer control valve according to at least one of the preceding claims, characterized by the following features:

a) the throttle is formed by a movably arranged throttle member (85) and by a projection (80) fixed to the housing and arranged in the housing (78) receiving the throttle member (85);

b) the throttle member (85) is in operative connection with the control piston (88) such that it is movable by the control piston (88) towards the projection (80) fixed to the housing;

c) the projection (80) fixed to the housing defines a pressure medium inlet chamber (81) connected to the first supply connection (82);

d) the pressure medium inlet chamber (81) of the housing (78) receiving the throttle is continuously connected to the pressure medium inlet chamber (70) of the housing (58) containing the relay piston (56) and the combined inlet and outlet valve (59, 62, 63, 64).

7. A trailer control valve according to claim 1, characterized in that the control piston (15) for operating the throttle (53, 21) is arranged in the housing or in the housing part (1) in which also the first relay piston (7, 8) is arranged.

8. A trailer control valve according to at least one of the preceding claims, characterized in that the control piston (15, 85, 88) is so arranged that it defines the pressure medium inlet chamber (38, 81) with at least a part of its other active face.

9. A trailer control valve according to at least one of the preceding claims, characterized in that the control piston (15, 85, 88) forms the variable throttle together with an aperture (51, 82) leading to the pressure medium inlet chamber (38, 81) and provided for the pressure coming from the supply line of the towing vehicle.

10. A trailer control valve according to at least one of the preceding claims, characterized in that on its side facing the pressure medium inlet chamber (38, 81) the control piston (15, 85, 88) has a throttle member (21, 54, 85, 84) which forms the throttle with a throttle member (53, 80, 83) of the housing.

11. A trailer control valve according to at least one of the preceding claims, characterized in that the two active faces of the control piston (15, 85, 88) are so dimensioned that, in the event of a drop in pressure in the pressure medium inlet chamber (38, 81) during injection of brake pressure into the trailer brake line with the brake system intact, the control piston (15, 85, 88) is not brought into the position in which it reduces the aperture cross-section of the throttle (53, 21, 84, 83).

12. A trailer control valve according to claim 1 and claim 2, for a brake system provided with a venting brake valve, characterized by the following features:

a) a second relay piston (7, 8, 23) is provided which consists of a first relay piston part (7, 8) and of a second relay piston part (23), wherein the two relay piston parts (7, 8, 23) are connected one behind the other and are rigidly joined together;

b) the first relay piston part (7, 8) of the second relay piston (7, 8, 23) has a valve seat (6) and together with a valve body (45) and a further valve seat (4) forms the combined inlet and outlet valve (45, 6, 4) operable by the first relay piston (48) for the pressure medium outlet chamber (5);

c) the first relay piston part (7, 8) of the second relay piston (7, 8, 23) defines the pressure medium inlet chamber (38);

d) the second relay piston part (23) of the second relay piston (7, 8, 23) defines a second control chamber (35) which is connected via the venting brake valve to an auxiliary brake circuit;

e) the force exerted on the first relay piston part (7, 8) by the pressure from the pressure medium inlet chamber (38) is opposed to the force exerted on the second relay piston part (23) by the pressure from the second control chamber (35).

13. A trailer control valve according to claim 12 for a compressed air-operated dual circuit brake system, characterized in that the side of the second relay piston part (23) of the second relay piston (7, 8, 23) remote from the second control chamber (35) defines a third control chamber (24) which is connected to a second brake circuit of the towing vehicle.

14. Trailer control valve according to at least one of the preceding claims, characterized in that the control chamber (32) defined by the control piston (15) is loaded by the control pressure acting on the first relay piston (48).

15. A trailer control valve according to at least one of the preceding claims, characterized in that the control chamber (32) defined by the control piston (15) is loaded by the pressure from the second brake circuit.

16. A trailer control valve according to at least one of the preceding claims, characterized in that the variable throttle is formed by a housing projection (53, 80, 84) projecting into the pressure medium inlet chamber (38, 81) and by at least a part of the active face of the control piston (15, 85, 88) defining the pressure medium inlet chamber (38, 81), wherein the housing projection (53, 80, 84) is so arranged that the pressure medium flowing through the aperture (51, 82) towards the pressure medium inlet chamber (38, 81) flows through the gap between the housing projection (53, 80, 84) and the control piston (15, 85, 88).

17. A trailer control valve according to claim 16, characterized in that on the side of the control piston (15, 85, 88) facing the pressure medium inlet chamber (38, 81) there is provided a circumferential projection (21) which is so arranged that, on movement of the control piston (15, 85, 88) towards the housing projection (53, 80, 84), it can be brought into engagement with the housing projection (53, 80, 84).

18. A trailer control valve according to claim 17, characterized in that a recess (54, 84) extending in a radial direction is provided in the circumferential projection (21) arranged on the control piston (15, 85, 88).

19. A trailer control valve according to at least one of the preceding claims, characterized by the following features:

a) the aperture is formed by a housing recess (51) connecting the pressure medium inlet chamber (38, 81) to a first supply connection (41, 82);

b) on the side of the control piston (15, 85, 88) facing the pressure medium inlet chamber (38, 81) there is provided a projection which, on movement of the control piston (15, 85, 88) away from the control chamber (32, 90), is movable towards the aperture (51).

20. A trailer control valve according to at least one of the preceding claims, characterized in that the throttle operable by the control piston (15), or the aperture of variable cross-section forming a throttle with the control piston (15), is provided in the region of the second supply connection (14).

21. A trailer control valve according to at least one of the preceding claims, characterized in that a spring is provided which loads the control piston in the opening direction of the switchable throttle.

**Revendications**

1. Soupape de commande de remorque pour une installation de freinage à air comprimé à deux conduites comprenant une conduite d'alimentation de remorque, interposée entre le véhicule tracteur et le véhicule remorqué et une conduite de freinage de la remorque, elle aussi interposée entre le véhicule tracteur et le véhicule remorqué, présentant les traits caractéristiques suivants:

a) il est prévu une chambre de sortie de fluide de pression (5) pour alimenter la conduite de freinage de remorque;

b) la chambre de sortie de fluide de pression (5) peut être reliée à une chambre d'entrée de fluide de pression (38) ou à l'atmosphère par l'intermédiaire d'une soupape combinée d'admission et d'échappement (45, 6, 4);

c) la chambre d'entrée de fluide de pression (38) peut être reliée, d'une part, à une conduite d'alimentation du véhicule tracteur, par l'intermédiaire d'un étranglement (53, 21) que l'on peut faire passer d'une position de service non étranglée à des sections de passage plus petites, par l'intermédiaire d'un raccord d'alimentation (41) et, d'autre part, à la conduite d'alimentation de la remorque, par l'intermédiaire d'un deuxième raccord d'alimentation (14);

d) il est prévu au moins un piston de relais (48) pouvant être chargé par une pression de commande et servant à actionner la soupape combinée d'admission et d'échappement (45, 6, 4);

e) il est prévu, pour actionner l'étranglement (53, 21) dont on peut faire varier la section de passage, un piston de commande (15) qui présente deux surfaces actives, les pressions agissant sur les deux surfaces actives exerçant des forces mutuellement opposées sur le piston de commande (15);

f) le piston de commande (15) est agencé de telle manière que l'une de ses surfaces actives soit chargée par la pression de commande qui charge le piston de relais (48); caractérisée en ce que le piston de commande (15) est agencé de telle manière que son autre surface active soit chargée par la pression provenant de la chambre d'entrée de fluide de pression (38).

2. Soupape de commande de remorque selon la revendication 1, caractérisée en ce qu'il est prévu au moins deux corps ou parties de corps (50, 78), dont l'une (58) sert à recevoir le piston de relais (56) et l'autre (78) à recevoir le piston de commande (88, 85).

3. Soupape de commande de remorque selon la revendication 2, caractérisée en ce que les deux parties de corps (58, 70) sont disposées l'une à côté de l'autre.

4. Soupape de commande de remorque selon au moins une des revendications précédentes, caractérisée en ce que la partie de corps (78) qui reçoit le piston de commande (85, 88) est fixée par un assemblage à bride à la partie de corps (58) qui reçoit le piston de relais (56).

5. Soupape de commande de remorque selon au moins une des revendications précédentes, caractérisée en ce que l'étranglement (85, 84, 83) est disposé dans le même corps (78) que celui dans lequel le piston de commande (88) est lui aussi disposé.

6. Soupape de commande de remorque selon au moins une des revendications précédentes, caractérisée par les traits caractéristiques suivants:

a) l'étranglement est formé d'un organe d'étranglement (85) monté mobile et par une protubérance (80) solidaire du corps disposée dans le corps (78) qui reçoit l'organe d'étranglement (85);

b) l'organe d'étranglement (85) est en liaison fonctionnelle avec le piston de commande (88) de telle manière qu'il puisse être poussé vers la protubérance (80) solidaire du corps par le piston de commande (88);

c) la protubérance (80) solidaire du corps délimite une chambre d'entrée de fluide de pression (81) qui est reliée au premier raccord d'alimentation (82);

d) la chambre d'entrée de fluide de pression (81) du corps (78) reçoit l'étranglement est en liaison constante à la chambre d'entrée de fluide de pression (70) du corps (68) qui reçoit le piston de relais (56) ainsi que la soupape combinée d'admission et d'échappement (59, 62 ou 63, 64).

7. Soupape de commande de remorque selon la revendication 1, caractérisée en ce que le piston de commande (15) servant à actionner l'étranglement (53, 21) et disposé dans le corps ou dans la partie du corps (1) dans lequel ou laquelle est également disposé le premier piston de relais (7, 8).

8. Soupape de commande de remorque selon au moins une des revendications précédentes, caractérisée en ce que le piston de commande (15, 85, 88) est disposé de manière à délimiter la chambre d'entrée de fluide de pression (38, 81) par au moins une partie de son autre surface active.

9. Soupape de commande de remorque selon au moins une des revendications précédentes, caractérisée en ce que le piston de commande (15, 85, 88) forme l'étranglement variable en combinaison avec un passage (51, 82) qui mène à la chambre d'entrée de fluide de pression (38, 81) et qui conduit la pression provenant de la conduite d'alimentation du véhicule tracteur.

10. Soupape de commande de remorque selon au moins une des revendications précédentes, caractériseé en ce que, sur sa face dirigée vers la chambre d'entrée de fluide de pression (38, 81), le piston de commande (15, 85, 88) présente un organe d'étranglement (21, 51, 85, 84) qui forme l'étranglement en combinaison avec un organe d'étranglement (53, 80, 83) appartenant au corps.

11. Soupape de commande de remorque selon au moins une des revendications précédentes, caractérisée en ce que les deux surfaces actives du piston de commande (15, 85, 88) sont calculées de telle façon que, dans le cas d'une éventuelle chute de la pression qui se produit dans la chambre d'entrée de fluide de pression (38, 81), le piston de commande (15, 85, 88) ne soit pas amené dans une position qui réduit la section de passage de l'étranglement (53, 21, 84, 83) par la pression de commande, au cours d'une introduction de pression de freinage dans la conduite de freinage de la remorque alors que l'installation de freinage est intacte.

12. Soupape de commande de remorque selon la revendication 1 et la revendication 2, pour une installation de freinage équipée d'une soupape de freinage à mise à l'atmosphère, caractérisée par les traits caractéristiques suivants:

a) il est prévu un deuxième piston de relais (7, 8, 23) qui est composé d'une première partie de piston de relais (23), les deux parties de piston de relais (7, 8, 23) étant disposées l'une à la suite de l'autre et reliées rigidement l'une à l'autre;

b) la première partie de piston de relais (7, 8) du deuxième piston de relais (7, 8, 23) présente un siège de soupape (6) et forme en combinaison avec un élément obturateur de soupape (45) et un autre siège de soupape (4), la soupape combinée d'admission et d'échappement (45, 6, 4) qui commande la chambre de sortie de fluide de pression (5) et qui peut être actionnée par le premier piston de relais (48);

c) la première partie de piston de relais (7, 8) du deuxième piston de relais (7, 8, 23) délimite la chambre d'entrée de fluide de pression (38);

d) la deuxième partie de piston de relais (23) du deuxième piston de relais (7, 8, 23) limite une deuxième chambre de commande (35) qui est reliée à un circuit de freinage auxiliaire par l'intermédiaire de la soupape de freinage à mise à l'atmosphère;

e) la force exercée sur la première partie de piston de relais (7, 8) par la pression provenant de la chambre d'entrée de fluide de pression (34) est dirigée en sens inverse de la force qui est exercée sur la deuxième partie (23) du piston de relais par la pression provenant de la deuxième chambre de commande (35).

13. Soupape de commande de remorque selon la revendication 12, pour une installation de freinage à air comprimé à deux circuits, caractérisée en ce que la face de la deuxième partie de piston de relais (23) du deuxième piston de relais (7, 8, 23) qui est à l'opposé de la deuxième chambre de commande (35) délimite une troisième chambre de commande (24) qui est reliée à un deuxième circuit de freinage du véhicule tracteur.

14. Soupape de commande de remorque selon au moins une des revendications précédentes, caractérisée en ce que la chambre de commande (32) délimitée par le piston de commande (15) est chargée par la pression de commande qui charge le premier piston de relais (48).

15. Soupape de commande de remorque selon au moins une des revendications précédentes, caractérisée en ce que la chambre de commande (32) délimitée par le piston de commande (15) est chargée par la pression provenant du deuxième circuit de freinage.

16. Soupape de commande de remorque selon au moins une des revendications précédentes, caractérisée en ce que l'étranglement variable est formé par une protubérance (53, 80, 84) du corps qui fait saillie dans la chambre d'entrée de fluide de pression (38, 81) et par au moins une partie de la surface active du piston de commande (15, 85, 88) délimitant la chambre d'entrée de fluide de pression (38, 81), la protubérance du corps (53, 80, 84) étant disposée de telle manière que le fluide de pression qui s'écoule à travers le passage (51, 82) en direction de la chambre d'entrée de fluide de pression (38, 81) s'écoule à travers la fente formée entre la protubérance (53, 80, 84) du corps et le piston de commande (15, 85, 88).

17. Soupape de commande de remorque selon la revendication 16, caractérisée en ce qu'il est prévu, sur la face du piston de commande (15, 85, 88) qui est dirigée vers la chambre d'entrée de fluide de pression (38, 81), une protubérance périphérique (21) qui est disposée de telle manière que, lorsque le piston de commande (15, 85, 88) se déplace vers la protubérance (53, 80, 84) du corps, cette protubérance puisse être mise en appui sur la protubérance (53, 80, 84) du corps.

18. Soupape de commande de remorque selon la revendication 17, caractérisée en ce que, dans la protubérance périphérique (21) disposée sur le piston de commande (15, 85, 88), est prévu un évidement (54, 84) qui s'étend dans la direction radiale.

19. Soupape de commande de remorque selon au moins une des revendications précédentes, caractérisée par les traits caractéristiques suivants:

a) le passage formé par un évidement (51) du corps qui relie la chambre d'entrée de fluide de pression (38, 81) à un premier raccord d'alimentation (41, 82);

b) il est prévu, sur la face du piston de commande (15, 85, 88) dirigée vers la chambre d'entrée de fluide de pression (38, 81), une protubérance qui peut se rapprocher du passage (51) lorsque le piston de commande (15, 85, 88) se déplace dans le sens qui s'éloigne de la chambre de commande (32, 90).

20. Soupape de commande de remorque selon au moins une des revendications précédentes, caractérisée en ce que l'étranglement pouvant être actionné par le piston de commande (15), ou bien le passage de section variable qui forme un étranglement en combinaison avec le piston de commande (15), est prévu dans la région du deuxième raccord d'alimentation (14).

21. Soupape de commande de remorque selon au moins une des revendications précédentes, caractérisée en ce qu'il est prévu un ressort qui charge le piston de commande dans le sens tendant à ouvrir l'étranglement commandé.

**Fig. 4**

Fig. 2